# EUROPÄISCHE PATENTSCHRIFT

(11) **EP 2 551 287 B1**
(45) Veröffentlichungstag und Bekanntmachung des Hinweises auf die Patenterteilung: **11.09.2019**
(21) Anmeldenummer: 12173539.3
(22) Anmeldetag: 26.06.2012
(51) Int. Cl.: C08G 18/18, C08K 5/34, C08K 5/54, C08K 5/20, C08G 18/48, C08G 18/76, C08J 9/00, C08G 18/20

(54) **Additivzusammensetzung, einsetzbar zur Steuerung der Schaumeigenschaften bei der Herstellung von Polyurethanweichschäumen, die Polyole auf Basis nachwachsender Rohstoffe enthalten**
Additive compound which can be used to control foaming properties during the production of polyurethane soft foams containing polyols based on renewable materials
Composition d'additif, utilisable pour la commande des propriétés de moussage lors de la fabrication de mousses souples de polyuréthane, contenant des polyols à base de matières premières repoussantes

(30) Priorität: 26.07.2011 DE 102011079791
(43) Veröffentlichungstag der Anmeldung: 30.01.2013
(73) Patentinhaber: Evonik Degussa GmbH, 45128 Essen (DE)
(72) Erfinder: Terheiden, Annegret, 46519 Alpen (DE); Hubel, Roland, 45136 Essen (DE); Ferenz, Michael, 45147 Essen (DE)
(74) Vertreter: Evonik Patent Association

(56) Entgegenhaltungen:
- DE-A1-102006 038 661
- GB-A- 1 090 589
- US-A- 2 993 869
- US-A1- 2010 286 295

## Beschreibung

Die vorliegende Erfindung betrifft eine Additivzusammensetzung, geeignet als Additiv zur Steuerung der Schaumeigenschaften von Polyurethanschäumen, welche dadurch gekennzeichnet ist, dass sie mindestens ein ionisches Tensid A, ausgewählt aus solchen der Formel A⁻M⁺, mit A⁻ = Anion, ausgewählt aus der Gruppe umfassend Alkyl- und Arylsulfate, Polyethersulfate und -sulfonate, Sulfonate, Alkyl- und Arylsulfonate, Alkyl- und Arylcarboxylate, Saccharinate und Polyetherphosphate, und M⁺ = Kation, und/oder mindestens ein ionisches Tensid B, ausgewählt aus einer quaternisierten Ammoniumverbindung, und mindestens eine tertiäre Aminverbindung C, die eine Molmasse von mindestens 150 g/mol aufweist, und ein Oxazasilinan D, enthält, ein Verfahren zur Herstellung von Polyurethanschaum unter Verwendung dieser Additivzusammensetzung sowie entsprechend hergestellte Polyurethanschäume und deren Verwendung.

Polyurethane unterschiedlicher Art werden durch die Polymerisation von Diisocyanaten, wie z. B. 4,4'-Methylenbis(phenylisocyanat), kurz MDI, oder 2,4-Toluoldiisocynat, kurz TDI, mit Polyetherpolyolen oder Polyesterpolyolen hergestellt. Polyetherpolyole können z. B. durch Alkoxylierung von polyhydroxyfunktionellen Startern gefertigt werden. Geläufige Starter sind z. B. Glykole, Glycerin, Trimethylolpropan, Pentaerythrit, Sorbit oder Saccharose. Bei der Herstellung von Polyurethanschäumen kommen zusätzliche Treibmittel zum Einsatz, wie z. B. Pentan, Methylenchlorid, Aceton oder Kohlenstoffdioxid. Üblicherweise werden zur Stabilisierung des Polyurethanschaums oberflächenaktive Substanzen, insbesondere Tenside eingesetzt. Neben einigen wenigen rein organischen Tensiden werden aufgrund ihres höheren Grenzflächenstabilisierungspotentials meist Silikontenside verwendet.

Eine Vielzahl verschiedener Polyurethanschäume, wie beispielsweise Heißweichschaum, Kaltschaum, Esterschaum, PUR-Hartschaum und PIR-Hartschaum sind bekannt. Die hierbei eingesetzten Stabilisatoren sind auf die jeweilige Endanwendung passgenau entwickelt und zeigen üblicherweise eine deutlich veränderte Performance, falls sie bei der Herstellung anderer Schaumarten eingesetzt werden.

Im Stand der Technik werden die zur Polyurethanschaumstabilisierung verwendeten Polysiloxan-Polyoxyalkylen-Blockmischpolymerisate häufig durch edelmetallkatalysierte Hydrosilylierung von ungesättigten Polyoxyalkylenen mit SiH-funktionellen Siloxanen, sogenannten Wasserstoffsiloxanen, wie beispielsweise in der EP 1 520 870 beschrieben hergestellt. Die Hydrosilylierung kann batchweise oder kontinuierlich, wie beispielsweise in der DE 198 59 759 C1 beschrieben, durchgeführt werden.

Ein Vielzahl weiterer Schriften, wie beispielsweise die EP 0 493 836 A1, US 5,565,194 oder EP 1 350 804 offenbart jeweils speziell zusammengesetzte Polysiloxan-Polyoxyalkylen-Blockmischpolymerisate zur Erfüllung spezifischer Anforderungsprofile für Schaumstabilisatoren in diversen Polyurethanschaumformulierungen.

Mit Blick auf die langfristig begrenzte Verfügbarkeit fossiler Ressourcen, namentlich Öl, Kohle und Gas, und vor dem Hintergrund steigender Rohölpreise gab es innerhalb der letzten Jahre ein gesteigertes Interesse Polyole auf Basis nachwachsender Rohstoffe zur Herstellung von Polyurethanschäumen einzusetzen (WO 2005/033167 A2 ;US 2006/0293400 A1). Mittlerweile sind auf dem Markt eine Reihe dieser Polyole von verschiedenen Herstellern verfügbar (WO2004/020497, US2006/0229375, WO2009/058367). In Abhängigkeit vom Basis-Rohstoff (z. B. Sojabohnenöl, Palmöl oder Rizinusöl) und die daran angeschlossene Aufarbeitung ergeben sich Polyole mit unterschiedlichem Eigenschaftsbild. Hierbei können im Wesentlichen zwei Gruppen unterschieden werden:
a) Polyole auf Basis nachwachsender Rohstoffe, die soweit modifiziert werden, dass sie zu 100% zur Herstellung von Polyurethanschaumstoffen eingesetzt werden können (WO2004/020497, US2006/0229375),
b) Polyole auf Basis nachwachsender Rohstoffe, die bedingt durch ihre Aufarbeitung und Eigenschaften nur zu einem gewissen Anteil das petrochemisch basierte Polyol ersetzen können (WO2009/058367, US6433121).

Insbesondere die Verwendung von pflanzlichen Polyolen der Gruppe B hat deutliche Auswirkungen auf die Herstellung von Polyurethanweichblockschäumen, sowohl auf die Prozessführung als auch auf die physikalisch-chemischen Eigenschaften des resultierenden Schaums. So führt beispielsweise die Verwendung von pflanzlichen Polyolen hergestellt aus Sojabohnenöl oder Palmöl mit steigender Einsatzmenge unter sonst gleichen Prozessbedingungen zu einer Verlängerung der Steigzeit, einer Veränderung der Härte und Luftdurchlässigkeit sowie zu einer Abnahme der Bruchdehnung, Zugfestigkeit und Elastizität des Schaums. Einigen Veränderungen, wie z.B. Steigzeit und Luftdurchlässigkeit können durch eine entsprechende Anpassung der Formulierung, d.h. zum Beispiel der Katalysatorkombination, entgegengewirkt werden. Andere physikalische Eigenschaften wie beispielsweise Härte, Bruchdehnung, Zugfestigkeit und Elastizität bleiben jedoch nachteilig verändert.

In den Patentschriften US2010/0286295A1 und DE 102010039004 werden spezielle Stabilisatorstrukturen beschrieben, die eine Verbesserung der physikalischen Eigenschaften von Polyurethanweichblockschäumen aus pflanzlichen Polyolen ermöglichen. Diese neuartigen Stabilisatoren wurden jedoch speziell für die Herstellung von Polyurethanweichblockschäumen aus pflanzlichen Polyolen entwickelt. Eine Verwendung dieser Stabilisatoren in konventionellen Schaumtypen, die keine pflanzlichen Polyole enthalten, ist nicht empfehlenswert. Dies würde beispielsweise ein zu starkes Rücksacken des Schaumes und eine nicht optimale Dichteverteilung innerhalb des Schaumblockes zur Folge haben. Von Seiten der Kunden wird es jedoch bevorzugt, Stabilisatoren einzusetzen, die sowohl für Polyurethanweichblockschäume aus pflanzlichen Polyolen als auch für Standard-Schäume verwendet werden können.

GB 1,090,589 A offenbart ein Verfahren zur Herstellung von PUR-Schäumen, wobei Zusammensetzungen beschrieben werden, die ein anionisches Tensid und eine tertiäre Aminverbindung umfassen.

US 2,993,869 offenbart ein Verfahren zur Herstellung von hochelastischen und feuchtigkeitsbeständigen Polyurethanschäumen auf Grundlage von Polyethern und/oder Polyestern mit endständigen Hydroxylgruppen und organischen Diisocyanaten, wobei Zusammensetzungen beschrieben werden, die ein anionisches Tensid und eine tertiäre Aminverbindung umfassen.

DE 10 2006 038661 A1 beschreibt wässrige Polyurethanheißweichschaumstabilisatorlösungen, wobei kationsiche Tenside oder anionische Tenside eingesetzt werden.

Aufgabe der vorliegenden Erfindung war es deshalb Additive bereitzustellen, die eine Verbesserung der physikalischen Eigenschaften von Polyurethanweichblockschäumen auf Basis von pflanzlichen Polyolen ermöglichen und gleichzeitig die Verwendung konventioneller Stabilisatoren erlauben.

Überraschenderweise wurde gefunden, dass diese Aufgabe gelöst werden kann durch eine Additivzusammensetzung, geeignet als Additiv zur Steuerung der Schaumeigenschaften von Polyurethanschäumen, welche mindestens ein ionisches Tensid A, ausgewählt aus solchen der Formel A⁻M⁺, mit A⁻ = Anion, ausgewählt aus der Gruppe umfassend Alkyl- und Arylsulfate, Polyethersulfate und -sulfonate, Sulfonate, Alkyl- und Arylsulfonate, Alkyl- und Arylcarboxylate, Saccharinate und Polyetherphosphate, und M⁺ = Kation, und/oder mindestens ein ionisches Tensid B, vorzugsweise ausgewählt aus einer quaternisierten Ammoniumverbindung, und mindestens eine tertiäre Aminverbindung C, die eine Molmasse von mindestens 150 g/mol aufweist, und mindestens ein Oxazasilinan D, enthält.

Gegenstand der vorliegenden Aufgabe sind deshalb Additivzusammensetzungen wie in den Ansprüchen beansprucht und nachfolgend beschrieben. Ebenfalls Gegenstand der vorliegenden Erfindung ist ein Verfahren zur Herstellung von Polyurethanschäumen, bei dem die erfindungsgemäße Additivzusammensetzung verwendet wird. Außerdem sind Gegenstände der vorliegenden Erfindung Polyurethanschäume, hergestellt durch das erfindungsgemäße Verfahren sowie daraus hergestellte Erzeugnisse.

Durch die Verwendung der erfindungsgemäßen Additivzusammensetzung können Polyurethanweichschaumstoffe unter Verwendung von pflanzlichen Polyolen hergestellt werden, die im Vergleich mit Polyurethanweichschaumstoffen, die ohne Additiv hergestellt wurden, verbesserte physikalische Eigenschaften aufweisen.

Die erfindungsgemäßen Additive haben weiterhin den Vorteil, dass sie bei der Herstellung von Polyurethanheißweichschäumen unter Verwendung von pflanzlichen Polyolen zu feinzelligeren Polyurethanweichschäumen führen.

Die erfindungsgemäßen Additivzusammensetzungen haben außerdem den Vorteil, dass sie auch in Kombination mit herkömmlichen Stabilisatoren eingesetzt werden können.

Die erfindungsgemäßen Additivzusammensetzungen und deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Wenn nicht anders angegeben wurde die Molmasse der eingesetzten Verbindungen durch Gelpermeationschromatographie (GPC) und die Bestimmung der Struktur der eingesetzten Verbindungen durch NMR-Methoden, insbesondere durch ¹³C- und ²⁹Si-NMR bestimmt. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar. Sind nachfolgend Messwerte angegeben, so sind diese Messungen, wenn nicht anders angegeben bei Normalbedingungen (25 °C und 1013 mbar) durchgeführt worden.

Die erfindungsgemäßen Additivzusammensetzungen, vorzugsweise geeignet als Additiv zur Steuerung der Schaumeigenschaften von Polyurethanschäumen, zeichnen sich dadurch aus, dass sie
a) mindestens ein ionisches Tensid A, ausgewählt aus solchen der Formeln (I)

   A⁻M⁺ (I)

   mit A⁻ = Anion, ausgewählt aus der Gruppe umfassend Alkyl- und Arylsulfate, Polyethersulfate und -sulfonate, Sulfonate, Alkyl- und Arylsulfonate, Alkyl- und Arylcarboxylate, Saccharinate und Polyetherphosphate, und M⁺ = Kation, welches kein Ammoniumkation ist, vorzugsweise Metallkation, bevorzugt Alkalimetallkation und besonders bevorzugt Kalium- oder Natriumkation, und/oder
b) mindestens ein ionisches Tensid B, ausgewählt aus einer quaternisierten Ammoniumverbindung,
   und
c) mindestens eine tertiäre Aminverbindung C, die kein Oxazasilinan ist und eine Molmasse von mindestens 150 g/mol, bevorzugt mindestens 200 g/mol aufweist, und die vorzugsweise in einer Konzentration von 0,5 Massen-% in Wasser die statische Oberflächenspannung dieser Lösung auf kleiner 40 N/m herabsetzt,
   und
d) mindestens ein Oxazasilinan D,
enthält.

Vorzugsweise ist das Tensid B ausgewählt aus einer Imidazolium-Verbindung, einer Pyridiniumverbindung oder einer Verbindung der Formel (IIa) bis (IIc)

NR²ₓR³₄₋ₓ⁺X⁻ (IIA)

R^{1'}R^{2'}R^{3'}R^{4'}N⁺X⁻ (IIb)

R^{1'}R^{2'}N⁺=CR^{3'}R^{4'}X⁻ (IIc)

mit x = 0 bis 4, vorzugsweise 1 bis 3, bevorzugt 2 oder 3, X⁻ = Anion, R² = gleiche oder verschiedene, vorzugsweise gleiche Alkylreste mit 1 bis 3 Kohlenstoffatomen, vorzugsweise zwei Kohlenstoffatomen und bevorzugt einem Kohlenstoffatom,
R³ = gleiche oder verschiedene gegebenenfalls Doppelbindungen enthaltende Kohlenwasserstoffreste mit 5 bis 30, vorzugsweise 8 bis 20 Kohlenstoffatomen, Arylreste, Alkylarylreste oder alkoxylierte Kohlenwasserstoffreste, Polyetherreste der Formel (VI)

-(CH₂)_{y}-O-(C₂H₄O)ₒ-(C₃H₆O)ₚ-OH (VI)

mit o und p unabhängig voneinander 0 bis 100, vorzugsweise 0 bis 50, wobei die Summe aus o + p jeweils größer 0 ist und y gleich 2 bis 4, vorzugsweise 2.

R^{1'},R^{2'},R^{3'},R^{4'} gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome, insbesondere Sauerstoff, NH, NR' mit R' gleich einem gegebenenfalls Doppelbindungen enthaltenden C₁-C₃₀-Alkylrest, insbesondere -CH₃, unterbrochenen linearen oder verzweigten gegebenenfalls Doppelbindungen enthaltenden aliphatischen Kohlenwasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, -(O)C-NH, -(CH₃)N-C(O)-, -(O)C-N(CH₃)-, -S(O₂)-O-, -O-S(O₂)-, -S(O₂)-NH-, -NH-S(O₂)-, -S(O₂)-N(CH₃)-, -N(CH₃)-S(O₂)-, unterbrochenen linearen oder verzweigten gegebenenfalls Doppelbindungen enthaltenden aliphatischen Kohlenwasserstoffrest mit 2 bis 30 Kohlenstoffatomen, einen endständig OH, OR', NH₂, N(H)R', N(R')₂ (mit R' gleich einem gegebenenfalls Doppelbindungen enthaltenden C₁-C₃₀-Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß -(R^{5'}-O)ₙ-R^{6'} bedeuten,
wobei
R^{5'} ein 2 bis 4 Kohlenstoffatome enthaltender linearer oder verzweigter Kohlenwasserstoffrest,
n 1 bis 100, vorzugsweise 2 bis 60, ist und
R^{6'} Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest -C(O)-R^{7'} mit R^{7'} gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen ist.

Als Kationen für das Tensid B kommen ferner Ionen in Betracht, die sich von gesättigten oder ungesättigten cyclischen Verbindungen sowie von aromatischen Verbindungen mit jeweils mindestens einem dreibindigen Stickstoffatom in einem 4- bis 10-, vorzugsweise 5- bis 6-gliedrigen heterocyclischen Ring ableiten, der gegebenenfalls substituiert sein kann. Solche Kationen lassen sich vereinfacht (d. h. ohne Angabe von genauer Lage und Zahl der Doppelbindungen im Molekül) durch die nachstehenden allgemeinen Formeln (VII), (VIII) und (IX) beschreiben, wobei die heterocyclischen Ringe gegebenenfalls auch mehrere Hetereoatome enthalten können 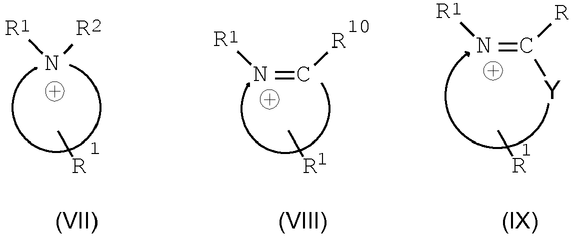 worin
R¹⁰ gleich oder unterschiedlich ein Wasserstoff, ein linearer oder verzweigter gegebenenfalls Doppelbindungen enthaltender aliphatischer Kohlenwasserstoffrest mit 1 bis 30 Kohlenstoffatomen, ein cycloaliphatischer gegebenenfalls Doppelbindungen enthaltender Kohlenwasserstoffrest mit 5 bis 40 Kohlenstoffatomen, ein aromatischer Kohlenwasserstoffrest mit 6 bis 40 Kohlenstoffatomen oder ein Alkylarylrest mit 7 bis 40 Kohlenstoffatomen ist,
R¹¹ und R¹² die für R^{1'} und R^{2'} genannte Bedeutung haben,
Y ein Sauerstoffatom oder ein substituiertes Stickstoffatom (Y = O,NR^{1a}) ist,
R^{1a} Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden C₁-C₃₀-Alkylrest, insbesondere -CH₃) unterbrochenen linearen oder verzweigten gegebenenfalls Doppelbindungen enthaltenden aliphatischen Kohlenwasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, -(CH₃)N-C(O)-, -(O)C-N(CH₃)-, -S(O₂)-O-, -O-S(O₂)-,-S(O₂)-NH-, -NH-S(O₂)-, -S(O₂)-N(CH₃)-, -N(CH₃)-S(O₂)-, unterbrochenen linearen oder verzweigten gegebenenfalls Doppelbindungen enthaltenden aliphatischen Kohlenwasserstoffrest mit 2 bis 30 Kohlenstoffatomen, einen endständig OH, OR', NH₂, N(H)R', N(R')₂ (mit R' gleich einem gegebenenfalls Doppelbindungen enthaltenden C₁-C₃₀-Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß -(R⁵'-O)ₙ-R^{6'} bedeuten.

Beispiele für cyclische Stickstoffverbindungen der vorgenannten Art sind Pyrrolidin, Dihydropyrrol, Pyrrol, Imidazolin, Oxazolin, Oxazol, Isoxazol, Indol, Carbazol, Piperidin, Pyridin, die isomeren Picoline und Lutidine, Chinolin und iso-Chinolin. Die cyclischen Stickstoffverbindungen der allgemeinen Formeln (VII), (VIII) und (IX) können unsubstituiert (R¹⁰ = H), einfach oder auch mehrfach durch den Rest R¹⁰ substituiert sein, wobei bei einer Mehrfachsubstitution durch R¹⁰ die einzelnen Reste R¹⁰ unterschiedlich sein können.

Als Kationen kommen weiterhin Ionen in Betracht, die sich von gesättigten acyclischen, gesättigten oder ungesättigten cyclischen Verbindungen sowie von aromatischen Verbindungen mit jeweils mehr als einem dreibindigen Stickstoffatom in einem 4- bis 10-, vorzugsweise 5- bis 6-gliedrigen heterocyclischen Ring ableiten. Diese Verbindungen können sowohl an den Kohlenstoffatomen als auch an den Stickstoffatomen substituiert sein. Sie können ferner durch, gegebenenfalls substituierte, Benzolringe und/oder Cyclohexanringe unter Ausbildung mehrkerniger Strukturen aneliert sein. Beispiele für solche Verbindungen sind Pyrazol, 3,5-Dimethylpyrazol, Imidazol, Benzimidazol, N-Methylimidazol, Dihydropyrazol, Pyrazolidin, Pyridazin, Pyrimidin, Pyrazin, Pyridazin, Pyrimidin, 2,3-, 2,5- und 2,6-Dimethylpyrazin, Cimolin, Phthalazin, Chinazolin, Phenazin und Piperazin. Insbesondere vom Imidazolin und seinen Alkyl- und Phenylderivaten abgeleitete Kationen haben sich als Bestandteil bewährt.

Als Kationen kommen ferner Ionen in Betracht, welche zwei Stickstoffatome enthalten und durch die allgemeine Formel (X) wiedergegeben sind 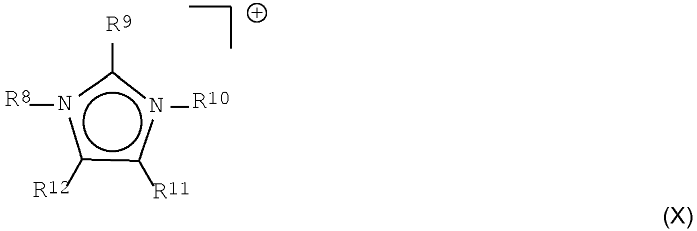 in denen
R^{8'},R^{9'},R^{10'},R^{11'},R^{12'} gleich oder unterschiedlich sein können und Wasserstoff, einen linearen oder verzweigten gegebenenfalls Doppelbindungen enthaltenden aliphatischen Kohlenwasserstoffrest mit 1 bis 30, vorzugsweise 1 bis 8, insbesondere 1 bis 4 Kohlenstoffatomen, einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden C₁-C₃₀-Alkylrest), unterbrochenen linearen oder verzweigten gegebenenfalls Doppelbindungen enthaltenden aliphatischen Kohlenwasserstoffrest mit 1 bis 30 Kohlenstoffatomen, einen durch ein oder mehrere Funktionalitäten, ausgewählt aus der Gruppe -O-C(O)-, -(O)C-O-, -NH-C(O)-, -(O)C-NH, -(CH₃)N-C(O)-, -(O)C-N(CH₃)-, -S(O₂)-O-, -O-S(O₂)-, -S(O₂)-NH-, -NH-S(O₂)-, -S(O₂)-N(CH₃)-, -N(CH₃)-S(O₂)-, unterbrochenen linearen oder verzweigten gegebenenfalls Doppelbindungen enthaltenden aliphatischen Kohlenwasserstoffrest mit 1 bis 30 Kohlenstoffatomen, einen endständig OH, OR', NH₂, N(H)R', N(R')₂ mit R' gleich einem gegebenenfalls Doppelbindungen enthaltenden C₁-C₃₀-Alkylrest, funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether aufgebaut aus -(R⁵'-O)ₙ-R^{6'} bedeuten, wobei R^{5'},n und R^{6'} wie oben definiert sind.

Die Anionen X⁻ im Tensid B sind vorzugsweise ausgewählt aus der Gruppe der Halogenide, Nitrate, Sulfate, Hydrogensulfate, Alkyl- und Arylsulfate, Polyethersulfate und -sulfonate, Sulfonate, Alkyl- und Arylsulfonate, Alkyl- und Arylcarboxylate, Saccharinate, Polyetherphosphate und Phosphate.

Als Anionen X⁻ weisen die erfindungsgemäß vorhandenen Tenside B bevorzugt ein Chlorid-, Phosphat- oder Methylsulfat-Anion, vorzugsweise ein Methylsulfat-Anion auf.

Die erfindungsgemäße Zusammensetzung weist mindestens ein Oxazasilinan auf. Als Oxazasilinan enthält die erfindungsgemäße Zusammensetzung vorzugsweise 2,2,4-Trimethyl-1,4,2-oxazasilinan (Formel (III))

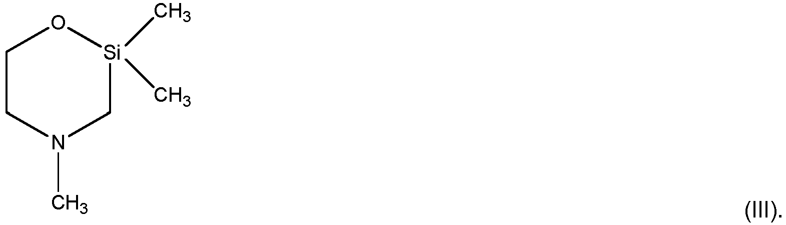

Vorzugsweise ist das Tensid A ausgesucht aus solchen der Formel (la)

R¹-SO3⁻ M⁺ (la)

mit R¹ = organischer Rest, insbesondere Kohlenwasserstoffrest oder -O-Kohlenwasserstoffrest, bevorzugt R¹ = gesättigte oder ungesättigte Kohlenwasserstoffreste mit 5 bis 30, vorzugsweise 8 bis 20 Kohlenstoffatomen, Arylreste oder Alkylarylreste, und M⁺ = Kation, vorzugsweise Alkalimetallkation, bevorzugt Natriumkation. Bevorzugte ionische Tenside A sind z. B. solche der Formeln (Ib) bis (Id)

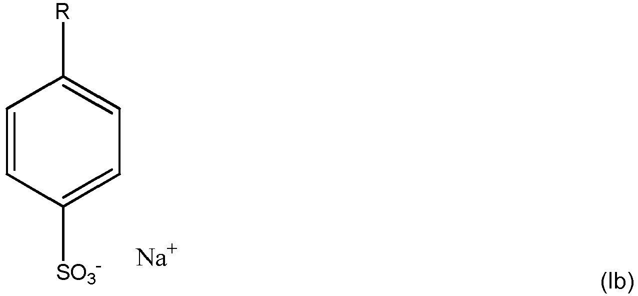

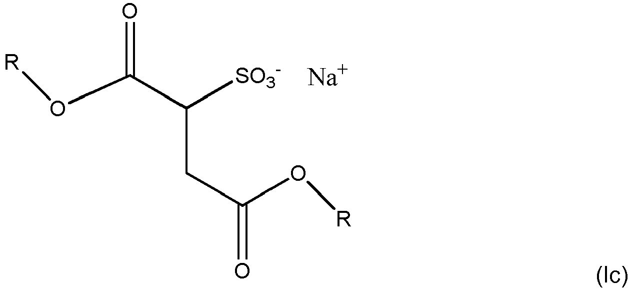

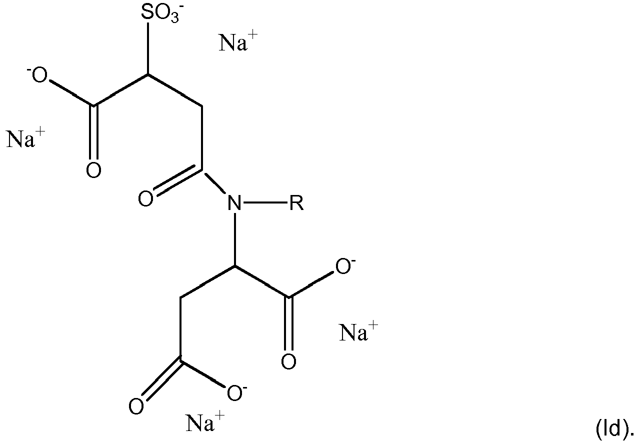

Bevorzugte ionische Tenside B sind insbesondere Imidazolium-Verbindungen, besonders bevorzugt solche der Formel (IV)

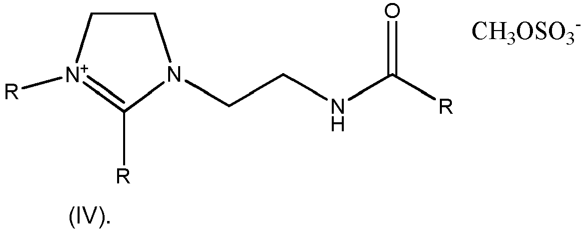

Die Reste R in den Formeln (Ib) bis (Id) und (IV) können gleiche oder unterschiedliche, gesättigte oder ungesättigte, gegebenenfalls alkoxylierte Kohlenwasserstoffreste mit 1 bis 30, vorzugsweise 1 bis 20 Kohlenstoffatomen, sein.

Die erfindungsgemäß vorhandenen Amine C sind vorzugsweise nicht ionisch, weisen also keine elektrische Ladung auf. Bevorzugte Amine C sind z. B. solche der Formel (V) 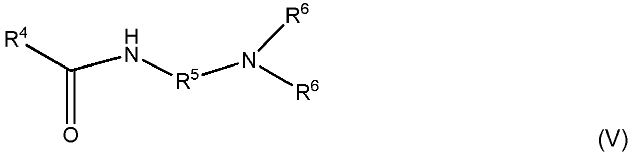 mit
R⁴= gesättigte oder ungesättigte Kohlenwasserstoffreste mit 5 bis 30, vorzugsweise 8 bis 20 Kohlenstoffatomen,
R⁵ = zweiwertiger Alkylrest mit 2 oder 3 Kohlenstoffatomen,
R⁶ = gleiche oder verschiedene, vorzugsweise gleiche Alkylreste mit 1 bis 3 Kohlenstoffatomen, bevorzugt Methylreste.

Besonders bevorzugt als Amin C ist ein Dimethylaminopropyl-Cocossäureamid.

In der erfindungsgemäßen Zusammensetzung beträgt das Massenverhältnis der Summe aller Tenside A und B zur Summe aller Amine C vorzugsweise von 20 zu 1 bis 1:10, bevorzugt 10 : 1 bis 1:10 und besonders bevorzugt von 5 : 1 bis 1 zu 5. Enthält die erfindungsgemäße Zusammensetzung ein oder mehrere Oxazasilinane D, so beträgt das Massenverhältnis der Summe aller Amine C zur Summe aller Oxazasilinane D vorzugsweise von 500 zu 1 bis 1:1, bevorzugt von 200 : 1 bis 5:1 und besonders bevorzugt von 50 : 1 bis 10 zu 1. Als Oxazasilinan enthält die Zusammensetzung vorzugsweise 2,2,4-Trimethyl-1,4,2-oxazasilinan Formel (III)

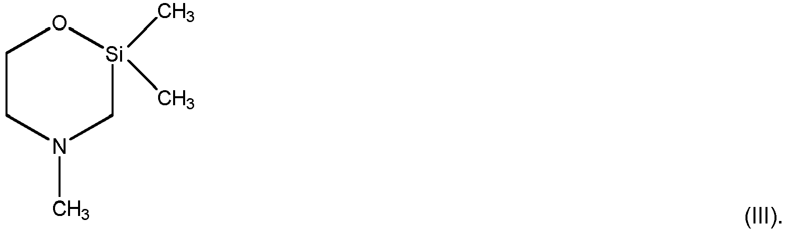

Die erfindungsgemäße Additivzusammensetzung kann als solche oder in Kombination mit anderen zur Herstellung von Polyurethanschäumen eingesetzten Substanzen vorliegen bzw. verwendet werden.

Neben den Komponenten A bis D kann die erfindungsgemäße Zusammensetzung demgemäß eine oder mehrere weitere, bei der Herstellung von Polyurethanschäumen verwendbare Substanzen, ausgewählt aus Nukleierungsmitteln, Stabilisatoren, Zellöffnern, Vernetzern, Emulgatoren, Flammschutzmitteln, Antioxidantien, Antistatika, Bioziden, Farbpasten, festen Füllstoffen, Aminkatalysatoren, Metallkatalysatoren und Puffersubstanzen, enthalten. Es kann vorteilhaft sein, wenn die erfindungsgemäße Zusammensetzung ein oder mehrere Lösungsmittel, vorzugsweise ausgewählt aus Glykolen, Alkoxylaten oder Ölen synthetischer und/oder natürlicher Herkunft, enthält.

Die erfindungsgemäßen Zusammensetzungen können in allen herkömmlichen Verfahren zur Herstellung von Polyurethanschäumen, wie z. B. von PolyurethanWeichschaum, -Heißweichschaum, -Hartschaum, -Kaltschaum, -Esterschaum, viscoelastischem Weichschaum oder auch High Resilience-Schaum (HR-Schaum), insbesondere zur Herstellung von Polyurethanweichschäumen, eingesetzt werden.

Das erfindungsgemäße Verfahren zur Herstellung von Polyurethanschäumen durch Umsetzung einer oder mehrerer Polyolkomponenten mit einer oder mehrerer Isocyanatkomponenten, zeichnet sich demgemäß dadurch aus, dass als Additiv eine erfindungsgemäße Additivzusammensetzung eingesetzt wird. In dem erfindungsgemäßen Verfahren werden als Polyolkomponente vorzugsweise teilweise oder vollständig solche eingesetzt, die auf natürlichen (nachwachsenden) Rohstoffen basieren. Bevorzugt werden im erfindungsgemäßen Verfahren als Polyolkomponenten Mischungen von Polyolen eingesetzt, die mindestens 10 Gew.-%, bevorzugt 25 Gew.-% an Polyolen aufweisen, die auf natürlichen (nachwachsenden) Rohstoffen basieren, bezogen auf die Summe der vorhandenen Polyole.

Die Menge an Additivzusammensetzung wird vorzugsweise so gewählt, dass das Massenverhältnis aller eingesetzter Polyolkomponenten zur Summe aller eingesetzten Amine C von 2000 zu 1 bis 10 zu 1, bevorzugt von 1000 zu 1 bis 20 zu 1 und besonders bevorzugt von 250 zu 1 bis 50 zu 1 beträgt.

Vorzugsweise wird der PU-Schaum dadurch erzeugt, dass eine Mischung enthaltend zumindest einen Urethan- und/oder Isocyanurat-Katalysator, zumindest ein Treibmittel, zumindest eine Isocyanatkomponente und zumindest eine Polyolkomponente in Gegenwart der erfindungsgemäßen Additivzusammensetzung verschäumt wird.

Neben den genannten Komponenten kann die Mischung weitere Bestandteile aufweisen, wie z. B. optional (weitere) Treibmittel, optional Präpolymere, optional Flammschutzmittel und optional weitere Additive (die von den in der erfindungsgemäßen Additivzusammensetzung genannten verschieden sind), wie z. B. Füllstoffe, Emulgatoren, Emulgatoren, die auf der Umsetzung von hydroxyfunktionellen Verbindungen mit Isocyanat beruhen, Stabilisatoren, wie z. B. Si-haltige und nicht Si-haltige, insbesondere Si-haltige und nicht Si-haltige organische Stabilisatoren und Tenside, Viskositätssenker, Farbstoffe, Antioxidantien, UV-Stabilisatoren oder Antistatika. Es versteht sich von selbst, dass der Fachmann zur Herstellung der unterschiedlichen Polyurethanweichschaumstoff-Typen, d.h. Heiß-, Kalt- oder Ester-Polyurethanweichschaumstoffe, die hierfür jeweils notwendigen Substanzen, wie z. B. Isocyanat, Polyol, Präpolymer, Stabilisatoren, etc. entsprechend auswählt, um den jeweils gewünschten Polyurethanweichschaumstoff-Typ zu erhalten.

Nachstehend sind eine Reihe von Schutzrechten angegeben, die geeignete Komponenten und Verfahren zur Herstellung der unterschiedlichen Polyurethanweichschaumstoff-Typen, d.h. Heiß-, Kalt- sowie Ester-Polyurethanweichschaumstoffe beschreiben, auf die im vollen Umfang Bezug genommen wird: EP 0152878 A1, EP 0409035 A2, DE 102005050473 A1, DE 19629161 A1, DE 3508292 A1, DE 4444898 A1, EP 1061095 A1, EP 0532939 B1, EP 0867464 B1, EP1683831 A1 und DE102007046860 A1.

Weitere Angaben zu verwendbaren Ausgangsstoffen, Katalysatoren sowie Hilfs- und Zusatzstoffen finden sich beispielsweise im Kunststoff-Handbuch, Band 7, Polyurethane, Carl-Hanser-Verlag München, 1. Auflage 1966, 2. Auflage, 1983 und 3. Auflage, 1993.

Die nachstehenden Verbindungen, Komponenten und Additive sind lediglich beispielhaft genannt und können durch andere dem Fachmann bekannte Stoffe ersetzt werden.

Weitere Tenside, die bei der Herstellung von Polyurethanweichschaumstoffen eingesetzt werden, können z. B. ausgewählt sein aus der Gruppe umfassend nichtionische Tenside und/oder amphotere Tenside.

Als Tenside können erfindungsgemäß auch polymere Emulgatoren, wie Polyalkylpolyoxyalkylpolyacrylate, Polyvinylpyrrolidone oder Polyvinylacetate verwendet werden. Ebenso können als Tenside/Emulgatoren Präpolymere, die durch Umsetzung von geringen Mengen von Isocyanaten mit Polyolen erhalten werden (sog. Oligourethane), und die vorzugsweise gelöst in Polyolen vorliegen, eingesetzt werden.

Als Biozide können handelsübliche Produkte verwendet werden, wie Chlorophen, Benzisothiazolinon, Hexahydro-1,3,5-tris(hydroxyethyl-s-triazin), Chlor-methyl-isothiazolinon, Methyl-isothiazolinon oder 1,6-Dihydroxy-2,5-dioxohexan, die unter den Handelsnamen BIT 10, Nipacide BCP, Acticide MBS, Nipacide BK, Nipacide Cl, Nipacide FC bekannt sind.

Oftmals werden alle Komponenten außer den Polyolen und Isocyanaten vor dem Verschäumen zu einer Aktivatorlösung vermischt. Diese enthält dann u.a. die erfindungsgemäß verwendbare Additivzusammensetzung, Stabilisatoren, Katalysatoren bzw. Katalysatorkombination, das Treibmittel, beispielsweise Wasser, sowie eventuell weitere Additive, wie Flammschutz, Farbe, Biozide etc, je nach Rezeptur des Polyurethanweichschaumstoffs. Auch eine solche Aktivatorlösung kann eine erfindungsgemäße Zusammensetzung sein.

Bei den Treibmitteln unterscheidet man zwischen chemischen und physikalischen Treibmitteln. Zu den chemischen Treibmitteln gehört z. B. Wasser, dessen Reaktion mit den Isocyanatgruppen zur Bildung von CO₂ führt. Die Rohdichte des Schaumstoffes lässt sich durch die zugegebene Wassermenge steuern, wobei die bevorzugten Einsatzmengen an Wasser zwischen 0,5 und 7,5 Teilen, bezogen auf 100,0 Teile Polyol, liegen. Darüber hinaus können alternativ und/oder auch zusätzlich, physikalische Treibmittel, wie Kohlendioxid, Aceton, Kohlenwasserstoffe, wie n-, iso- oder Cyclopentan, Cyclohexan, halogenierte Kohlenwasserstoffe, wie Methylenchlorid, Tetrafluorethan, Pentafluorpropan, Heptafluorpropan, Pentafluorbutan, Hexafluorbutan und/oder Dichlormonofluorethan, eingesetzt werden. Die Menge des physikalischen Treibmittels liegt dabei vorzugsweise im Bereich zwischen 1 bis 20 Gew.-Teilen, insbesondere 1 bis 15 Gew.-Teilen, die Menge an Wasser vorzugsweise im Bereich zwischen 0,5 bis 10 Gew.-Teilen, insbesondere 1 bis 5 Gew.-Teilen. Kohlendioxid wird von den physikalischen Treibmitteln bevorzugt, welches bevorzugt in Kombination mit Wasser als chemischem Treibmittel verwendet wird.

Die Aktivatorlösung kann zusätzlich alle üblichen im Stand der Technik für Aktivatorlösungen bekannten Zusätze enthalten. Die Zusätze können ausgewählt sein aus der Gruppe umfassend Flammschutzmittel, UV-Stabilisatoren, Farbstoffe, Biozide, Pigmente, Zellöffner, Vernetzer und dergleichen.

Zur Herstellung eines Polyurethanweichschaumstoffs wird vorzugsweise ein Gemisch (Mischung) aus Polyol, di- oder polyfunktionellem Isocyanat, erfindungsgemäßer Additivzusammensetzung, Aminkatalysator, Kalium-, Zink- und/oder Zinn-organischer-Verbindung oder andere metallhaltige Katalysatoren, Stabilisator, Treibmittel, vorzugsweise Wasser zur Bildung von CO₂ und, falls nötig, Zusatz von physikalischen Treibmitteln, gegebenenfalls unter Zugabe von Flammschutzmitteln, UV-Stabilisatoren, Farbpasten, Bioziden, Füllstoffen, Vernetzern oder sonstigen üblichen Verarbeitungshilfsmitteln, umgesetzt. Das Gemisch bzw. die Mischung können ebenfalls erfindungsgemäße Zusammensetzungen sein.

Als Isocyanate können organische Isocyanatverbindungen verwendet werden, die mindestens zwei Isocyanat-Gruppen enthalten. Generell kommen die an sich bekannten aliphatischen, cycloaliphatischen, araliphatischen und vorzugsweise aromatischen mehrwertigen Isocyanate in Frage. Besonders bevorzugt werden Isocyanate in einem Bereich von 60 bis 140 mol % relativ zu der Summe der isocyanatverbrauchenden Komponenten eingesetzt.

Im einzelnen seien beispielhaft genannt: Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4 und vorzugsweise Hexamethylendiisocyanat-1,6, cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie beispielsweise 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.

Es ist auch möglich, Isocyanate einzusetzen, die durch den Einbau von Urethan-, Uretdion-, Isocyanurat-, Allophanat und anderen Gruppen modifiziert wurden, sogenannte modifizierte Isocyanate.

Besonders bewährt haben sich als organische Polyisocyanate und kommen daher vorzugsweise zur Anwendung:
Toluylendiisocyanat, Gemische aus Diphenylmethandiisocyanat-Isomeren, Gemische aus Diphenylmethandiisocyanat und Polyphenylpolymethylpolyisocyanat oder Toluoldiisocyanat mit Diphenylmethandiisocyanat und/oder Polyphenylpolymethylpolyisocyanat oder so genannte Prepolymere.

Es können TDI (2,4- und 2,6-Toluylendiisocyanat-Isomerengemisch) als auch MDI (4,4'-Diphenylmethandiisocyanat) verwendet werden. Das sogenannte "crude MDI" oder "polymere MDI" enthält neben dem 4,4'- auch die 2,4'- und 2,2'-Isomeren sowie höherkernige Produkte. Als "pure MDI" bezeichnet man zweikernige Produkte aus überwiegend 2,4'- und 4,4'-Isomerengemischen bzw. deren Prepolymere. Weitere geeignete Isocyanate sind in den Patentschriften DE 444898 und EP 1095968 aufgeführt, auf die hier im vollen Umfang Bezug genommen wird.

Als Vernetzer werden niedermolekulare, gegenüber Isocyanaten reaktive mehrfunktionelle Verbindungen bezeichnet. Geeignet sind Hydroxyl- oder Aminterminierte Substanzen, wie Glycerin, Triethanolamin (TEOA), Diethanolamin (DEOA) und Trimethylolpropan. Die Einsatzkonzentration liegt üblicherweise zwischen 0,1 und 5 Teilen, bezogen auf 100,0 Teile Polyol je nach Formulierung, kann aber auch davon abweichen. Bei Verwendung von crude MDI bei der Formverschäumung übernimmt dies ebenfalls eine vernetzende Funktion. Der Gehalt an niedermolekularen Vernetzern kann daher bei steigender Menge an crude MDI entsprechend reduziert werden.

Die erfindungsgemäßen Zusammensetzungen können sowohl in der Block- als auch in der Formverschäumung verwendet werden. Es können alle dem Fachmann bekannten Verfahren zur Herstellung von Polyurethanweichschaumstoffen verwendet werden. So kann zum Beispiel der Schäumungsprozess sowohl in horizontaler als auch in vertikaler Richtung in diskontinuierlichen oder kontinuierlichen Anlagen erfolgen. Ebenso können die erfindungsgemäßen Stabilisatorformulierungen für die CO₂-Technologie benutzt werden. Die Verwendung in Niederdruck- und Hochdruckmaschinen ist möglich, wobei die erfindungsgemäßen Formulierungen sowohl direkt in die Mischkammer dosiert werden können oder auch schon vor der Mischkammer einer der danach in die Mischkammer gelangenden Komponenten zugemischt werden. Die Zumischung kann auch im Rohstofftank erfolgen.

Als Polyolkomponenten auf Basis von nachwachsenden Rohstoffen (NOP), können z. B. die in den Patentschriften WO 2004/020497, US 2006/0229375, WO 2009/058367, WO 2006/094227, WO 2004/096882, US 2002/0103091, WO2006/116456 und EP 1678232 beschriebenen, eingesetzt werden. Bevorzugte NOP sind solche, die auf Basis von z. B. Rizinusöl, Sojabohnenöl, Erdnußöl, Rapsöl, Palmöl oder Sonnenblumenöl erhalten werden können. Mit Ausnahme des Rizinusöls enthalten die vorgenannten Pflanzenöle keine Hydroxylgruppen. Die Einführung der zur Polyurethanbildung erforderlichen Hydroxylgruppe kann nach verschieden Verfahren erfolgen, von denen hier einige beispielhaft genannt seien: Ozonolyse mit anschließender Hydrierung [Petrovic ZS, Zhang W, Javni I, Biomacromolecules 2005; 6: 713-9]; Epoxidierung mit anschließender Ringöffnung (WO 2009/058367; US6433121); Hydroformulierung mit anschließender Hydrierung (WO2004096744); Luftoxidation mit anschließender Ringöffnung oder Hydroformulierung (US 2006/0229375); mikrobiologische Überführung in OHfunktionelle Polyole [Hou CT, Adv. Appl. Microbiol. 1995; 41: 1-23]. Die OH-funktionalisierten Biopolyole können entweder direkt oder nach einer Alkoxylierung zur Herstellung von Polyurethanschäumen eingesetzt werden. Die Alkoxylierung der OH-funktionalisierten Biopolyole kann nach dem Verfahren der alkalischen Alkoxylierung oder unter Verwendung von DMC-Katalysatoren erfolgen.

Neben oder an Stelle von, vorzugsweise neben Polyolkomponenten auf Basis von nachwachsenden Rohstoffen, können als weitere Polyolkomponenten alle bekannten Polyolverbindungen in der Mischung enthalten sein.

Es kann sich hierbei z. B. um Polyether- oder Polyesterpolyole handeln, die typischerweise 2 bis 6 OH-Gruppen pro Molekül tragen und neben Kohlenstoff, Wasserstoff und Sauerstoff auch Heteroatome wie Stickstoff, Phosphor oder Halogene enthalten können; vorzugsweise werden Polyetherpolyole eingesetzt. Solche Polyole können nach bekannten Verfahren hergestellt werden, beispielsweise durch anionische Polymerisation von Alkylenoxiden in Gegenwart von Alkalihydroxiden oder Alkalialkoholaten als Katalysatoren und unter Zusatz mindestens eines Startermoleküls, dass 2 bis 3 reaktive Wasserstoffatome gebunden enthält oder durch kationische Polymerisation von Alkylenoxiden in Gegenwart von Lewis-Säuren wie beispielsweise Antimonpentachlorid oder Borfluorid-Etherat oder durch Doppelmetallcyanidkatalyse. Geeignete Alkylenoxide enthalten 2 bis 4 Kohlenstoffatome im Alkylenrest. Beispiele sind Tetrahydrofuran, 1,3- Propylenoxid, 1,2- bzw. 2,3- Butylenoxid; vorzugsweise werden Ethylenoxid und/oder 1,2-Propylenoxid eingesetzt. Die Alkylenoxide können einzeln, alternierend nacheinander oder als Mischungen verwendet werden. Als Startermolekül kommen Wasser oder 2- und 3-wertige Alkohole in Betracht, wie Ethylenglykol, Propandiol-1,2 und -1,3, Diethylenglykol, Dipropylenglykol, Glycerin, Trimethylolpropan usw. Auch polyfunktionelle Polyole wie z.B. Zucker können als Starter eingesetzt werden. Die Polyetherpolyole, vorzugsweise Polyoxypropylenpolyoxyethylen-polyole besitzen eine Funktionalität von 2 bis 8 und zahlengemittelte Molekulargewichte im Bereich von 500 bis 8000, vorzugsweise 800 bis 4500. Weitere Polyole sind dem Fachmann bekannt und können zum Beispiel der EP-A-0 380 993 oder US-A-3 346557 entnommen werden, auf die im vollen Umfang Bezug genommen wird.

Bevorzugt werden zur Herstellung von Form- und hochelastischen Weichschaumstoffen zwei- und/oder dreifunktionelle Polyetheralkohole eingesetzt, die, bevorzugt über 50 mol-% bezogen auf die Summe der Hydroxylgruppen, an primären Hydroxylgruppen, aufweisen, insbesondere solche mit einem Ethylenoxidblock am Kettenende oder solche, die nur auf Ethylenoxid basieren.

Bevorzugt werden zur Herstellung von Blockweichschaumstoffen zwei- und/oder dreifunktionelle Polyetheralkohole eingesetzt, die sekundäre Hydroxylgruppen, bevorzugt über 80 mol-%, aufweisen, insbesondere solche mit einem Propylenoxidblock oder statistischen Propylen- und Ethylenoxidblock am Kettenende oder solche, die nur auf Propylenoxidblöcken basieren.

Eine weitere Klasse von Polyolen sind solche, die als Präpolymere durch Umsetzung von Polyol mit Isocyanat in einem Molverhältnis von 100 zu 1 bis 5 zu 1, bevorzugt 50 zu 1 bis 10 zu 1 erhalten werden. Solche Präpolymere werden vorzugsweise gelöst in Polyol eingesetzt, wobei das Polyol bevorzugt dem zur Herstellung der Präpolymeren eingesetzten Polyol entspricht.

Noch eine weitere Klasse von Polyolen stellen die sogenannten Füllkörperpolyole (Polymerpolyole) dar. Diese zeichnen sich dadurch aus, dass sie feste organische Füllstoffe bis zu einem Feststoffgehalt von 40 Gew.-% oder mehr in disperser Verteilung enthalten. Man verwendet unter anderem:
SAN-Polyole: Dies sind hochreaktive Polyole, welche ein Copolymer auf der Basis Styrol/Acrylnitril (SAN) dispergiert enthalten.
PHD-Polyole: Dies sind hochreaktive Polyole, welche Polyharnstoff ebenfalls in dispergierter Form enthalten.
PIPA-Polyole: Dies sind hochreaktive Polyole, welche ein Polyurethan, beispielsweise durch in situ-Reaktion eines Isocyanats mit einem Alkanolamin in einem konventionellen Polyol gebildet, in dispergierter Form enthalten.

Der Festkörperanteil, der je nach Anwendung bevorzugt zwischen 5 und 40 Gew.-%, bezogen auf das Polyol liegt, ist für eine verbesserte Zellöffnung verantwortlich, so dass das Polyol insbesondere mit TDI kontrolliert verschäumbar wird und kein Schrumpfen der Schäume auftritt. Der Festkörper wirkt damit als wesentliche Prozesshilfe. Eine weitere Funktion besteht darin, über den Feststoffanteil die Härte zu kontrollieren, denn höhere Festkörperanteile bewirken eine höhere Härte des Schaums.

Die Formulierungen mit feststoffhaltigen Polyolen sind deutlich weniger eigenstabil und bedürfen daher neben der chemischen Stabilisierung durch die Vernetzungsreaktion eher auch zusätzlich einer physikalischen Stabilisierung.

Je nach Feststoffgehalt der Polyole werden diese alleine oder in Abmischung mit den oben genannten ungefüllten Polyolen eingesetzt.

Als Treibmittel können die bekannten Treibmittel eingesetzt werden. Vorzugsweise werden bei der Herstellung des Polyurethanschaums Wasser, Methylenchlorid, Pentan, Alkane, halogenierte Alkane, Aceton und/oder Kohlendioxid als Treibmittel eingesetzt.

Das Wasser kann der Mischung direkt zugegeben werden oder aber als Nebenkomponente eines der Edukte, wie z. B. der Polyolkomponente, mit dieser der Mischung zugegeben werden.

Neben physikalischen Treibmitteln und ggf. Wasser können auch andere chemische Treibmittel eingesetzt werden, die mit Isocyanaten unter Gasentwicklung reagieren, wie beispielsweise Ameisensäure.

Als Katalysatoren können in der Mischung solche vorhanden sein, die die Gelreaktion (Isocyanat-Polyol), die Treibreaktion (Isocyanat-Wasser) oder die Di- bzw. Trimerisierung des Isocyanats katalysieren. Typische Beispiele sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N,N-Dimethylhexadecylamin, Oxazasilinan, N-Ethylmorpholin, Tris(dimethylaminopropyl)hexahydro-1,3,5-triazin, N,N-Dimethylaminoethanol, Dimethylaminoethoxyethanol und Bis(dimethylaminoethyl)ether, Zinkverbindungen bzw. -salze, Zinnverbindungen bzw. -salze, bevorzugt Zinnricinolat, und Kaliumsalze wie Kaliumacetat und Kalium-2-ethylhexanoat. Bevorzugt werden als Katalysatoren solche eingesetzt, die Zinnricinolat und/oder N,N-Dimethylhexadecylamin aufweisen.

Geeignete Einsatzmengen richten sich nach dem Typ des Katalysators und liegen üblicherweise im Bereich von 0,02 bis 5 pphp (= Gewichtsteilen bezogen auf 100 Gewichtsteile Polyol).

Mittels des erfindungsgemäßen Verfahrens ist ein Polyurethanschaum, insbesondere ein Polyurethanweichschaum erhältlich, der sich insbesondere dadurch auszeichnet, dass die zur Herstellung verwendete Polyolkomponente zumindest teilweise auf natürlichen (nachwachsenden) Rohstoffen basiert.

Mit dem erfindungsgemäßen Polyurethanschaum sind Artikel zugänglich die diesen Polyurethanschaum enthalten oder aus ihm bestehen. Solche Artikel können z. B. Möbelpolster, Kühlschrankisolierungen, Sprühschäume, Metallverbundelemente für die (Bau-)Isolierung, Matratzen oder Autositze sein.

Der Gegenstand der vorliegenden Erfindung wird nachfolgend an Hand von Beispielen näher erläutert, ohne dass der Gegenstand der Erfindung auf diese beispielhaften Ausführungsformen beschränkt sein soll.

### Herstellung der Polyurethanschäume

Zur Herstellung der Polyurethanschäume wurden 400 g Polyol eingesetzt; die anderen Formulierungsbestandteile wurden entsprechend umgerechnet. Dabei bedeutete beispielsweise 1,0 Teil einer Komponente 1 g dieser Substanz je 100 g Polyol.

Zur Verschäumung wurden das Polyol, Wasser, Katalysator (Amin(e) und/oder die Zinnverbindung), Stabilisator und erfindungsgemäße Additivzusammensetzung unter Rühren gut vermischt. Nach Zugabe des Isocyanats wurde mit einem Rührer 7 Sek. bei 3000 U/Min. gerührt und das Gemisch in einem mit Papier ausgekleideten Holzkasten (Grundfläche 27 cm x 27 cm) gegossen. Es entstand ein Schaumstoff, der den nachfolgend beschriebenen anwendungstechnischen Tests unterzogen wurde.

Gemäß Rezeptur 2 in Tabelle 2 basierend auf 4,0 Teilen Wasser wurden Polyurethanweichblockschäume unter Verwendung eines pflanzlichen Polyols auf Basis von Sojabohnenöl, eines konventionellen Stabilisators und unterschiedlichen Additiven hergestellt. Die resultierenden Schäume wurden hinsichtlich ihrer Charakteristik beim Schäumvorgang und ihrer physikalischen Eigenschaften miteinander verglichen. Als Referenzschäume dienten zum einen ein Polyurethanweichschaum der aus 100% Standardpolyol (petrochemischen Ursprungs) hergestellt wurde (Tabelle 1, Rezeptur 1) und ein Polyurethanweichschaum entsprechend Tabelle 2 ohne Zusatz eines speziellen Additivs.

Referenzschäume, die kein Polyol auf Basis von pflanzlichen Rohstoffen aufweisen, wurden gemäß der in Tabelle 1 angegebenen Rezeptur hergestellt.

**Tabelle 1: Rezeptur 1 für den Referenzschaum aus rein Mineralöl-basiertem Polyol (Angaben in Massenteilen)**

| | |
|---|---|
| 100 Teile | Polyol, Voranol® CP 3322 (Dow Chemical)*¹ |
| 4,0 Teile | Wasser |
| 0,8 Teile | TEGOSTAB® B 8228 (Evonik Goldschmidt GmbH) |
| 0,15 Teile | TEGOAMIN® 33 (Evonik Goldschmidt GmbH) |
| 0,18 Teile | KOSMOS® 29 (Evonik Goldschmidt GmbH) |
| 49,7 Teile | Isocyanat (Toluylendiisocyanat T80) |
| Index <108> | (80% 2,4-Isomer, 20% 2,6-Isomer) (Bayer Material Science AG) |

| | |
|---|---|
| *1 = Voranol® CP 3322, erhältlich bei der Firma Dow Chemical, hierbei handelt es sich um ein Polyethertriol mit der OH-Zahl 47. | |

Die Schäume, die ein Polyol basierend auf nachwachsenden Rohstoffen aufweisen, wurden gemäß der in Tabelle 2 angegebenen Rezepturen hergestellt.

**Tabelle 2: Rezeptur 2 mit pflanzlichem Polyol (Angaben in Massenteilen)**

| | |
|---|---|
| 70 Teile | Polyol, Voranol® CP 3322 (Dow Chemical)^{*1} |
| 30 Teile | pflanzliches Polyol auf Basis von Sojabohnenöl^{*2} |
| 4,0 Teile | Wasser gesamt |
| 0,8 Teile | Stabilisator TEGOSTAB® B 8228 (Evonik Goldschmidt GmbH) |
| 0,15 Teile | TEGOAMIN®33 (Evonik Goldschmidt GmbH) |
| 0,18 Teile | KOSMOS®29 (Evonik Goldschmidt GmbH) |
| Variable | Erfindungsgemäßes Additiv |
| Index <108> | Isocyanat (Toluylendiisocyanat T80) |
| | (80% 2,4-Isomer, 20% 2,6-Isomer) (Bayer Material Science AG) |

| | |
|---|---|
| *1 = Voranol® CP 3322, erhältlich bei der Firma Dow Chemical, hierbei handelt es sich um ein Polyethertriol mit der OH-Zahl 47 mg KOH/g. *2 = BIOH® X-0500 der Firma Cargill. | |

Verwendete ionische Tenside:
Tensid A1: Marlon AM 80, (Benzolsulfonsäure, C10-13-Alkylderivate, Natriumsalze, erhältlich bei Sasol)
Tensid A2: Rewopol B 2003 (Evonik Goldschmidt Rewo GmbH, Tetranatrium-N-(3-carboxylato-1-oxo-3-sulfonatopropyl)-N-octadecyl-DL-aspartat >=34 bis <=36%; Methanol <3%).
Tensid A3: Rewopol SB DO 75 (Evonik Goldschmidt Rewo GmbH, Natriumdiisooctylsulfosuccinat 75%; Ethanol 9,5%)
Tensid A4: Petroleumsulfonat (Additiv Chemie Luers GmbH & Co Kg.)
Tensid B: Rewoquat W 3690 (Evonik Goldschmidt GmbH, Imidazoliumverbindungen, 2-(C17- und C17-ungesättigte Alkyl)-1-[2-(C18- und C18-ungesättigte Amido)ethyl]-4,5-dihydro-1-methyl-, Methylsulfate >=75 bis <=77%; 2-Propanol, >=23 bis <=25%)

Verwendetes tertiäres Amin:
Amin C: Cocosfettsäureamidamin, statische Oberflächenspannung 0,5%ig in Wasser: 27,7 mN/m, (Evonik Goldschmidt GmbH, Tego Amid D5040)

Verwendetes Oxazasilinan:
2,2,4-Trimethyl-1,4,2-oxazasilinane (Apollo Scientific Ltd.)

### Anwendungstechnische Tests

Die hergestellten Schäume wurden anhand folgender physikalischer Eigenschaften bewertet:
a) Rücksacken des Schaumstoffes nach dem Ende der Steigphase (=Rückfall).
   Der Rückfall, bzw. das Nachsteigen ergibt sich aus der Differenz der Schaumhöhe nach direktem Abblasen und nach 3 min. nach Abblasen des Schaums. Die Schaumhöhe wird dabei durch eine an einem Zentimetermaß befestigte Nadel auf dem Maximum in der Mitte der Schaumkuppe gemessen. Ein negativer Wert beschreibt hierbei das Rücksacken des Schaumes nach dem Abblasen, ein positiver Wert beschreibt entsprechend das Nachsteigen des Schaumes.
b) Schaumhöhe
   Die Endhöhe des Schaumes wird dadurch bestimmt, dass der Rückfall bzw. das Nachsteigen von bzw. zu der Schaumhöhe nach dem Abblasen subtrahiert bzw. addiert wird.
c) Raumgewicht (RG)
   Die Bestimmung erfolgt, wie in ASTM D 3574 - 08 unter Test A beschrieben, durch Messung der Core Density.
d) Die Luftdurchlässigkeit des Schaums wurde durch eine Staudruckmessung am Schaumstoff ermittelt. Der gemessene Staudruck wurde in mm Wassersäule angegeben, wobei dann die niedrigeren Staudruckwerte den offeneren Schaum charakterisieren. Die Werte wurden im Bereich von 0 bis 300 mm gemessen.
e) Stauchhärte CLD 40% nach DIN EN ISO 3386-1.
f) Rückprallelastizität (Ball rebound test) nach ASTM D 1564-71.
g) Zugfestigkeit und Bruchdehnung nach DIN EN ISO 1798.
h) Zahl der Zellen pro cm.

Die Ergebnisse der anwendungstechnischen Tests für die verschiedenen Rezepturen und verwendeten Additive sind in Tabellen 3 bis 5 wiedergegeben.

**Tabelle 3**

| Versuch | 1.1 | 1.2 | 1.3 | 1.4 |
|---|---|---|---|---|
| | Rezeptur 1 | | Rezeptur 2 | |
| | 100 Teile Standardpolyol | | 30 Teile pflanzliches Polyol | |
| TEGOSTAB® B 8228 | 0,8 | - | 0,8 | - |
| NOP-Stabilisatoren aus Beispiel 1.1 aus DE 102010039004 | - | 0,8 | - | 0,8 |
| Steigzeit (s) | 95 | 87 | 122 | 108 |
| Rückfall (cm) | -0,4 | -1,9 | -0,3 | -0,5 |
| Schaumhöhe (cm) | 30,2 | 29,0 | 30,3 | 29,4 |
| Porosität (mm Wassersäule) | 10 | 10 | 22 | 18 |
| Dichte (kg/m³) | 24,8 | 26,7 | 24,6 | 25,0 |
| Stauchhärte CLD 40% (kPa) | 3,6 | 4,0 | 3,2 | 3,4 |
| Rückprallelastizität (%) | 45 | 45 | 31 | 34 |
| Zugfestigkeit (kPa) | 97 | 110 | 69 | 89 |
| Bruchdehnung (%) | 174 | 158 | 100 | 126 |
| Zellen /cm | 14 | 12-13 | 10 | 13 |
| Bemerkung | Regelmäßige Zellstruktur | Unregelmäßgige Zellstruktur; verdichtete Bodenzone | Regelmäßige Zellstruktur | Regelmäßige Zellstruktur |

**Tabelle 4**

| Versuch | 2 | 3 | 4.1 | 4.2 | 4.3 | 5.1 | 5.2 | 5.3 | 6.1 | 6.2 | 6.3 | 7.1 | 7.2 | 7.3 |
|---|---|---|---|---|---|---|---|---|---|---|---|---|---|---|
| | PU-Schäume mit 30 Teilen pflanzlichem Polyol entsprechend Rezeptur 2, Tabelle 2 | | | | | | | | | | | | | |
| Tensid A1 (Teile) | - | - | 0,8 | 0,8 | 0,8 | - | - | - | - | - | - | - | - | - |
| Tensid A2 (Teile) | - | - | - | - | - | - | - | - | 0,4 | 0,4 | 0,4 | - | - | - |
| Tensid A3 (Teile) | - | - | - | - | - | - | - | - | - | - | - | 1 | 1 | 1 |
| Tensid B (Teile) | - | - | - | - | - | 0,2 | 0,2 | 0,2 | - | - | - | - | - | - |
| Amin C (Teile) | - | 0,2 | - | 0,2 | 0,2 | - | 0,2 | 0,2 | - | 0,2 | 0,2 | - | 0,2 | 0,2 |
| Oxazasilinan (Teile) | - | - | - | | 0,006 | - | | 0,006 | - | - | 0,006 | - | - | 0,006 |
| Steigzeit (s) | 127 | 113 | 125 | 114 | 101 | 138 | 125 | 109 | 114 | 109 | 105 | 125 | 112 | 103 |
| Rückfall (cm) | -0,2 | +1,0 | 0,0 | +0,3 | -0,4 | 0,0 | 0,0 | -0,2 | -0,5 | -0,7 | -0,5 | -0,1 | -0,3 | -0,4 |
| Schaumhöhe (cm) | 29,4 | 32 | 30,6 | 32,3 | 33,3 | 30,9 | 32,1 | 32,8 | 31 | 31,7 | 32,7 | 32,7 | 32,3 | 33,6 |
| Porosität (mm Wassersäule) | 47 | 26 | 21 | 32 | 20 | 18 | 17 | 16 | 54 | 50 | 52 | 20 | 24 | 32 |
| Raumgewicht (kg/m³) | 23,5 | 24,7 | 23,7 | 24,6 | 23,4 | 23,4 | 23,4 | 23 | 23,9 | 23,8 | 24,8 | 23 | 23 | 22,2 |
| Stauchhärte CLD 40% (kPa) | 2,9 | 2,6 | 2,6 | 2,5 | 2,6 | 2,6 | 2,4 | 2,6 | 2,5 | 2,4 | 2,6 | 2,5 | 2,4 | 2,4 |
| Rückprallelastizität (%) | 36 | 38 | 38 | 38 | 38 | 38 | 38 | 39 | 37 | 38 | 38 | 37 | 37 | 37 |
| Zugfestigkeit (kPa) | 69 | 74 | 74 | 89 | 87 | 75 | 79 | 101 | 74 | 79 | 85 | 74 | 79 | 87 |
| Bruchdehnung (%) | 98 | 121 | 133 | 140 | 150 | 128 | 141 | 138 | 119 | 129 | 138 | 132 | 141 | 144 |
| Zellen /cm | 12 | 13 | 13 | 13 | 13 | 13 | 13 | 13 | 13 | 13 | 13 | 13 | 13 | 13 |
| Bemerkung | i.O. | Quer-Risse | Quer-Risse | i.O. | i.O. | Quer-Risse | i.O. | i.O. | i.O. | i.O. | i.O. | Quer-Risse | i.O. | i.O. |

**Tabelle 5:**

| Versuch | 8.1 | 8.2 | 8.3 |
|---|---|---|---|
| | PU-Schäume mit 30 Teilen pflanzlichem Polyol gemäß Rezeptur 2 | | |
| Tensid A4 (Teile) | - | 0,6 | 0,6 |
| Amin C (Teile) | - | - | 0,2 |
| Oxazasilinan (Teile) | - | - | 0,006 |
| Steigzeit (s) | 125 | 125 | 103 |
| Rückfall (cm) | 0,0 | 0,0 | -0,3 |
| Schaumhöhe | 30,6 | 29,9 | 31,8 |
| Porosität (mm Wassersäule) | 32 | 37 | 47 |
| Dichte (kg/m³) | 24,3 | 24,2 | 24,1 |
| Stauchhärte CLD 40% (kPa) | 3,0 | 3,0 | 2,8 |
| Rückprallelastizität (%) | 36 | 37 | 37 |
| Zugfestigkeit (kPa) | 64 | 75 | 86 |
| Bruchdehnung (%) | 98 | 112 | 124 |
| Zellen /cm | 12 | 13 | 13 |

Die Ergebnisse der physikalischen Eigenschaften in der Tabelle 3 Versuche 1.1 und 1.3 zeigen, dass der Austausch von Standardpolyolen durch pflanzliche Polyole eine veränderte Steigzeit und Schaumhärte sowie eine deutliche Abnahme der Rückprall-Elastizität, Zugfestigkeit und Bruchdehnung zur Folge hat. Ebenso verringert sich die Zellzahl pro Zentimeter, wenn pflanzliche Polyole der Formulierungsmischung zugesetzt werden. Durch die Verwendung spezieller für NOP-Anwendungen entwickelter Stabilisatoren, beispielsweise beschrieben in Beispiel 1.1 der Patentschrift DE 102010039004, können die physikalischen Schaumeigenschaften Elastizität, Bruchdehnung, Zugfestigkeit und Zellstruktur im Vergleich zu konventionellen Stabilisatoren verbessert werden. Ein Nachteil dieser NOP-Stabilisatoren besteht jedoch darin, dass sie für die Anwendungen in Formulierungen ohne pflanzliche Polyole nicht ohne weiteres geeignet sind. Wie der Versuch 1.2 zeigt, führen diese hier zu einem deutlichen Rücksacken des Schaumes, was mit einer verringerten Schaumhöhe, erhöhten Schaumdichte und verdichteten Bodenzone einhergeht. Im Hinblick auf NOP-haltige Formulierungen weist die alleinige Verwendung konventioneller Stabilisatoren jedoch häufig Schwächen auf. Dies zeigt sich besonders in den physikalichen Werten für Elastizität, Bruchdehnung und Zugfestigkeit sowie in der Zellstruktur. Werden zur Verschäumung jedoch konventionelle Stabilisatoren in Kombination mit den erfindungsgemäßen Additivzusammensetzungen (Bsp. 4.3, 5.3, 6.3, 7.3, 8.3) eingesetzt, so können die physikalischen Eigenschaften wie Rückprall-Elastizität, Zugfestigkeit und Bruchdehnung deutlich verbessert werden. Wie die Versuche 2 bis 8 zeigen, wird eine signifikante Verbesserung der physikalischen Schaumeigenschaften dadurch erzielt, dass die erfindungsgemäßen Kombinationen (Bsp. 4.3, 5.3, 6.3, 7.3, 8.3) von ionischen Tensiden mit tertiären Aminverbindungen eingesetzt werden. Neben den rein physikalischen Messwerten für Rückprall-Elastizität, Zugfestigkeit und Bruchdehnung führt die Verwendung der erfindungsgemäßen Kombination (Bsp. 4.3, 5.3, 6.3, 7.3, 8.3) von ionischen Tensiden mit tertiären Aminverbindungen zu einer verbesserten Verarbeitbarkeit. Während für die alleinige Anwendung der ionischen Tenside in den Beispielen 4.1, 5.1 und 7.1 Schäume mit großen Querrissen erhalten werden, führt die Zugabe der erfindungsgemäßen Additivzusammensetzung (Bsp. 4.3, 5.3, 6.3, 7.3, 8.3) zu fehlerfreien Schaumblöcken.

Ein weiterer Vorteil der erfindungsgemäßen Additivzusammensetzung (Bsp. 4.3, 5.3, 6.3, 7.3, 8.3) besteht darin, dass die Zellstruktur im Vergleich zu Polyurethanschäumen ohne zusätzliche Additive verbessert werden kann.

Unterschiedliche Werte für die Referenzschäume entsprechend Rezeptur 2 ohne erfindungsgemäße Additivzusammensetzung lassen sich dadurch begründen, dass diese Schäume an unterschiedlichen Tagen hergestellt wurden.

## Patentansprüche

1. Additivzusammensetzung, geeignet als Additiv zur Steuerung der Schaumeigenschaften von Polyurethanschäumen, **dadurch gekennzeichnet, dass** die Zusammensetzung
a) mindestens ein ionisches Tensid A, ausgewählt aus solchen der Formeln (I)
A⁻M⁺ (I)
mit A⁻ = Anion, ausgewählt aus der Gruppe umfassend Alkyl- und Arylsulfate, Polyethersulfate und -sulfonate, Sulfonate, Alkyl- und Arylsulfonate, Alkyl- und Arylcarboxylate, Saccharinate und Polyetherphosphate, und M+ = Kation, und/oder
b) mindestens ein ionisches Tensid B, ausgewählt aus einer quaternisierten Ammoniumverbindung, und
c) mindestens eine tertiäre Aminverbindung C, die eine Molmasse von mindestens 150 g/mol aufweist, und
d) mindestens ein Oxazasilinan D,
enthält.

2. Zusammensetzung nach Anspruch 1, **dadurch gekennzeichnet, dass** das Massenverhältnis der Summe aller Tenside A und B zur Summe aller Amine C von 20:1 bis 1:10, bevorzugt 10:1 bis 1:10 und besonders bevorzugt von 5:1 bis 1:5 beträgt.

3. Zusammensetzung nach Anspruch 1 oder 2, **dadurch gekennzeichnet, dass** das Massenverhältnis der Summe aller Amine C zur Summe aller Oxazasilinane D von 500:1 bis 1:1, bevorzugt von 200:1 bis 5:1 und besonders bevorzugt von 50 : 1 bis 10:1 beträgt.

4. Zusammensetzung nach mindestens einem der Ansprüche 1 bis 3, **dadurch gekennzeichnet, dass** sie als Oxazasilinan 2,2,4-Trimethyl-1,4,2-oxazasilinan Formel (III) 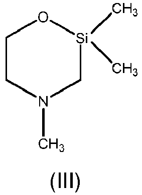 enthält.

5. Zusammensetzung nach mindestens einem der Ansprüche 1 bis 4, **dadurch gekennzeichnet, dass** sie eine oder mehrere bei der Herstellung von Polyurethanschäumen verwendbare Substanzen, ausgewählt aus Nukleierungsmitteln, Stabilisatoren, Zellöffnern, Vernetzern, Emulgatoren, Flammschutzmitteln, Antioxidantien, Antistatika, Bioziden, Farbpasten, festen Füllstoffen, Aminkatalysatoren, Metallkatalysatoren und Puffersubstanzen, enthalten.

6. Zusammensetzung nach mindestens einem der Ansprüche 1 bis 5, **dadurch gekennzeichnet, dass** als ionische Tenside B Imidazolium-Verbindungen, der Formel (IV) enthalten sind, 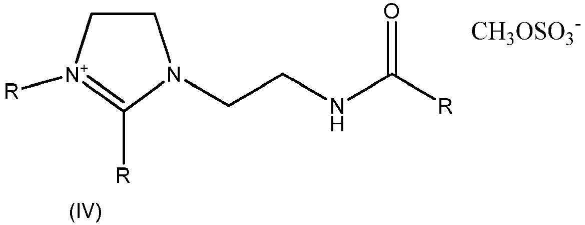 mit R gleiche oder unterschiedliche, gesättigte oder ungesättigte, gegebenenfalls alkoxylierte Kohlenwasserstoffreste mit 1 bis 30 Kohlenstoffatomen.

7. Verfahren zur Herstellung von Polyurethanschäumen durch Umsetzung einer oder mehrerer Polyolkomponenten mit einer oder mehrerer Isocyanatkomponenten, **dadurch gekennzeichnet, dass** als Additiv eine Additivzusammensetzung gemäß einem der Ansprüche 1 bis 6 eingesetzt wird.

8. Verfahren nach Anspruch 7, **dadurch gekennzeichnet, dass** die Menge an Additivzusammensetzung so gewählt wird, dass das Massenverhältnis aller eingesetzter Polyolkomponenten zur Summe aller eingesetzten Amine C von 2000 zu 1 bis 10 zu 1, bevorzugt von 1000 zu 1 bis 20 zu 1 und besonders bevorzugt von 250 zu 1 bis 50 zu 1 beträgt.

9. Verfahren nach Anspruch 7 oder 8, **dadurch gekennzeichnet, dass** als Polyolkomponente teilweise oder ausschließlich Polyole eingesetzt werden, die auf natürlichen Rohstoffen basieren.

10. Verfahren nach mindestens einem der Ansprüche 7 bis 9, **dadurch gekennzeichnet, dass** als Katalysatoren solche eingesetzt, die Zinnricinolat und/oder N,N-Dimethylhexadecylamin aufweisen.

11. Polyurethanschaum erhältlich durch ein Verfahren gemäß einem der Ansprüche 7 bis 10.

12. Artikel enthaltend oder bestehend aus einem Polyurethanschaum gemäß Anspruch 11.

## Claims

1. Additive composition useful as additive for controlling the foam properties of polyurethane foams, **characterized in that** the composition contains
a) at least one ionic surfactant A selected from those of formula (I)
A⁻M⁺ (I)
where A⁻ = anion selected from the group comprising alkyl and aryl sulphates, polyether sulphates and sulphonates, sulphonates, alkyl and aryl sulphonates, alkyl and aryl carboxylates, saccharinates and polyether phosphates, and M⁺ = cation, and/or
b) at least one ionic surfactant B selected from a quaternized ammonium compound, and
c) at least one tertiary amine compound C, which has a molar mass of at least 150 g/mol, and
d) at least one oxazasilinane D.

2. Composition according to Claim 1, **characterized in that** the mass ratio of the sum total of all surfactants A and B to the sum total of all amines C is in the range from 20:1 to 1:10, preferably in the range from 10:1 to 1:10 and more preferably in the range from 5:1 to 1:5.

3. Composition according to Claim 1 or 2, **characterized in that** the mass ratio of the sum total of all amines C to the sum total of all oxazasilinanes D is in the range from 500:1 to 1:1, preferably in the range from 200:1 to 5:1 and more preferably in the range from 50:1 to 10:1.

4. Composition according to at least one of Claims 1 to 3, **characterized in that** it contains 2,2,4-trimethyl-1,4,2-oxazasilinane of formula (III) 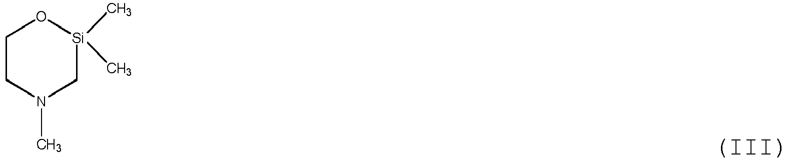 as oxazasilinane.

5. Composition according to at least one of Claims 1 to 4, **characterized in that** it contains one or more substances useable in the production of polyurethane foams and selected from nucleating agents, stabilizers, cell openers, crosslinkers, emulsifiers, flame retardants, antioxidants, antistatics, biocides, colour pastes, solid fillers, amine catalysts, metal catalysts and buffering substances.

6. Composition according to at least one of Claims 1 to 5, **characterized in that** imidazolium compounds of formula (IV) 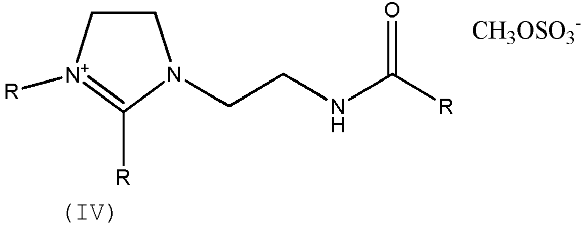 where R represents like or different, saturated or unsaturated, optionally alkoxylated hydrocarbon moieties having 1 to 30 carbon atoms, are included as ionic surfactants B.

7. Process for production of polyurethane foams by reacting one or more polyol components with one or more isocyanate components, **characterized in that** an additive composition according to any one of Claims 1 to 6 is used as additive.

8. Process according to Claim 7, **characterized in that** the amount of additive composition is chosen such that the mass ratio of all polyol components used to the sum total of all amines C used is in the range from 2000:1 to 10:1, preferably in the range from 1000:1 to 20:1 and more preferably in the range from 250:1 to 50:1.

9. Process according to Claim 7 or 8, **characterized in that** polyols based on natural raw materials are partly or exclusively used as polyol component.

10. Process according to at least one of Claims 7 to 9, **characterized in that** catalysts used include tin ricinoleate and/or N,N-dimethylhexadecylamine.

11. Polyurethane foam obtainable via a process according to any one of Claims 7 to 10.

12. Article containing or consisting of a polyurethane foam according to Claim 11.

## Revendications

1. Composition d'additif, appropriée en tant qu'additif pour réguler les propriétés de moussage de mousses de polyuréthane, **caractérisée en ce que** la composition contient :
a) au moins un tensioactif ionique A, choisi parmi ceux des formules (I) :
A⁻M⁺ (I)
avec A⁻ = un anion, choisi dans le groupe comprenant les alkyl- et arylsulfates, les polyéther-sulfates et-sulfonates, les sulfonates, les alkyl- et arylsulfonates, les alkyl- et arylcarboxylates, les saccharinates et les polyéther-phosphates, et M⁺ = un cation, et/ou
b) au moins un tensioactif ionique B, choisi parmi un composé d'ammonium quaternisé, et
c) au moins un composé d'amine tertiaire C, qui présente une masse molaire d'au moins 150 g/mol, et
d) au moins un oxazasilinane D.

2. Composition selon la revendication 1, **caractérisée en ce que** le rapport en masse entre la somme de tous les tensioactifs A et B et la somme de toutes les amines C est de 20:1 à 1:10, de préférence de 10:1 à 1:10 et de manière particulièrement préférée de 5:1 à 1:5.

3. Composition selon la revendication 1 ou 2, **caractérisée en ce que** le rapport en masse entre la somme de toutes les amines C et la somme de tous les oxazasilinanes D est de 500:1 à 1:1, de préférence de 200:1 à 5:1 et de manière particulièrement préférée de 50:1 à 10:1.

4. Composition selon au moins l'une quelconque des revendications 1 à 3, **caractérisée en ce qu'**elle contient en tant qu'oxazasilinane le 2,2,4-triméthyl-1,4,2-oxazasilinane de formule (III)

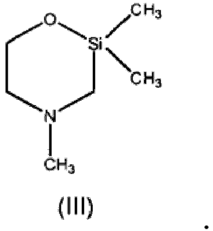

5. Composition selon au moins l'une quelconque des revendications 1 à 4, **caractérisée en ce qu'**elle contient une ou plusieurs substances utilisables lors de la fabrication de mousses de polyuréthane, choisies parmi les agents de nucléation, les stabilisateurs, les agents d'ouverture cellulaire, les agents de réticulation, les émulsifiants, les agents ignifuges, les antioxydants, les antistatiques, les biocides, les pâtes de couleur, les charges solides, les catalyseurs aminés, les catalyseurs métalliques et les substances tampons.

6. Composition selon au moins l'une quelconque des revendications 1 à 5, **caractérisée en ce que** des composés d'imidazolium de formule (IV) sont contenus en tant que tensioactifs ioniques B 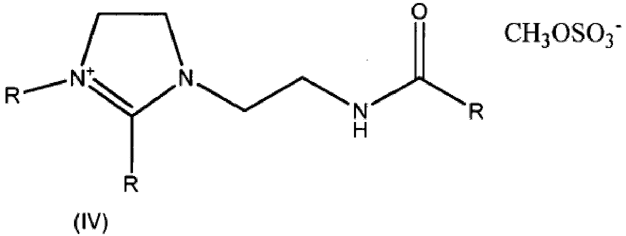 dans laquelle les R sont des radicaux hydrocarbonés identiques ou différents, saturés ou insaturés, éventuellement alcoxylés, de 1 à 30 atomes de carbone.

7. Procédé de fabrication de mousses de polyuréthane par mise en réaction d'un ou de plusieurs composants polyol avec un ou plusieurs composants isocyanate, **caractérisé en ce qu'**une composition d'additif selon l'une quelconque des revendications 1 à 6 est utilisée en tant qu'additif.

8. Procédé selon la revendication 7, **caractérisé en ce que** la quantité de la composition d'additif est choisie de telle sorte que le rapport en masse entre tous les composants polyol utilisés et la somme de toutes les amines C utilisées soit de 2 000 sur 1 à 10 sur 1, de préférence de 1 000 sur 1 à 20 sur 1, et de manière particulièrement préférée de 250 sur 1 à 50 sur 1.

9. Procédé selon la revendication 7 ou 8, **caractérisé en ce que** des polyols qui sont à base de matières premières naturelles sont utilisés en partie ou en exclusivité en tant que composant polyol.

10. Procédé selon au moins l'une quelconque des revendications 7 à 9, **caractérisé en ce que** des catalyseurs qui comprennent du ricinoléate d'étain et/ou de la N,N-diméthylhexadécylamine sont utilisés en tant que catalyseurs.

11. Mousse de polyuréthane pouvant être obtenue par un procédé selon l'une quelconque des revendications 7 à 10.

12. Article contenant ou constitué par une mousse de polyuréthane selon la revendication 11.
